# EUROPEAN PATENT APPLICATION

(11) **EP 2 450 101 A1**
(43) Date of publication of application: **09.05.2012**
(21) Application number: 11188225.4
(22) Date of filing: 08.11.2011
(51) Int. Cl.: B01J 19/18, C08F 2/00, C08F 2/01, C08F 2/02

(54) **Continuous polymerization apparatus and process for producing polymer composition**

(30) Priority: 08.11.2010 JP 2010249892
(71) Applicant: Sumitomo Chemical Company, Limited, Tokyo 104-8260 (JP)
(72) Inventor: Sumida, Masakazu, Niihama-shi, Ehime 792-8521 (JP); Yamazaki, Kazuhiro, Niihama-shi, Ehime 792-8521 (JP); Sato, Yoshinori, Niihama-shi, Ehime 792-8521 (JP); Wake, Takao, Niihama-shi, Ehime 792-8521 (JP)
(74) Representative: Vossius & Partner

(57) **Abstract**

The present invention is directed to a novel continuous polymerization apparatus which is able to more efficiently produce a polymer composition suitable for obtaining a resin composition of high quality.

In the continuous polymerization apparatus at least first and second reactors (10, 20) of a complete mixing type are used. Each of the reactors (10, 20) is provided with a supply port (11a, 21a) and an effluent port (11b, 21b) which is located at the reactor's top; the supply port (11a) of the first reactor (10) is connected to a supply source (1, 3) of a raw material monomer and a polymerization initiator; and the effluent port (11b) of the first reactor (10) is connected to the supply port (21a) of the second reactor (20).

## Description

### BACKGROUND OF THE INVENTION

### Field of the Invention

The present invention relates to a continuous polymerization apparatus, that is an apparatus for conducting polymerization continuously. Further, the present invention also relates to a process for producing a polymer composition using such a continuous polymerization apparatus.

### Description of Related Art

Resin compositions such as methacrylic ester polymers are obtained from polymer compositions produced by continuous polymerization in which a raw material polymer, a polymerization initiator and the like are continuously supplied to a reactor to be polymerized. As such continuous polymerization processes, there are known a continuous solution polymerization process using a solvent (or a dispersion medium, which also applies hereinafter) to conduct continuous polymerization, and a continuous bulk polymerization process using no solvent to conduct continuous polymerization.

A continuous solution polymerization process is not efficient since use of a solvent causes a low productivity. In contrast, a continuous bulk polymerization process has an advantage of being able to produce a polymer composition efficiently since the polymerization is conducted without using a solvent. Practically, the continuous bulk polymerization, however, has various problems compared with the continuous solution polymerization, such as that reaction control is difficult due to high viscosity of a reaction mixture, and when an inner surface of a reactor is cooled to remove heat from a reaction system, this degrades the quality of a polymer composition and thus of a resin composition. Then, a process is proposed which uses a reactor of a complete mixing type, fully fills the reactor with liquid to exclude a gas phase part therefrom, and conducts continuous bulk polymerization under an adiabatic condition with no heat transfer to or from the outside (JP 07-126308 A). Further, in order to assure such adiabatic condition, a continuous bulk polymerization apparatus is proposed which controls a supply amount of a raw material monomer and a supply amount of a polymerization initiator so as to make a temperature in the reactor equal to a setting temperature of an outer surface of the reactor (JP 2006-104282 A).

### SUMMARY OF THE INVENTION

### Technical Problem

In recent years, applications of resin compositions such as methacrylic ester polymers have been expanded. Furthermore, a demand is increasing for more efficiently producing a polymer composition which is suitable for obtaining a resin composition of high quality (for example, a resin composition having superior properties such as heat resistance and heat stability, and less admixed with impurities). However, it has been proven that the conventional continuous polymerization apparatuses (JP 07-126308 A and JP 2006-104282 A) are not always sufficient to meet the demand.

The purpose of the present invention is to provide a novel continuous polymerization apparatus and to provide a process for producing a polymer composition, which process is able to be conducted by using such a continuous polymerization apparatus and to more efficiently produce a polymer composition suitable for obtaining a resin composition of high quality.

### Solution to Problem

The inventors considered using at least two reactors of a complete mixing type in combination to conduct continuous polymerization. As to a continuous solution polymerization process, apparatuses having two stages of reactors are known, such as that the most part of polymerization is conducted in the former reactor and the polymerization is completed in the latter reactor while removing a polymerization initiator therefrom (JP 01-172401 A); and that polymerization is conducted to some extent in the former reactor and a solvent is added to the latter reactor to conduct polymerization (JP 05-331212 A). In such apparatuses, however, removal of heat from a reaction system is conducted by reflux cooling (a raw material monomer or the like in the reactor is evaporated to be taken out of the reactor, and it is returned to the reactor again after having been subjected to cold condensation), this brings about local or rapid cooling of the reaction system, which causes gel to adhere to and grow on the inner surface of the reactor, so that there is a problem such as that gelled substance is admixed into a resultant polymer composition as an impurity. The novel continuous polymerization apparatus of the present invention is able to more efficiently produce a polymer composition suitable for obtaining a resin composition of high quality.

The present invention provides the following [1] to [7].
[1] A continuous polymerization apparatus comprising at least first and second reactors of a complete mixing type, characterized in that
   each of the reactors is provided with a supply port and an effluent port which is located at a reactor's top;
   the supply port of the first reactor is connected to a supply source of a raw material monomer and a polymerization initiator; and
   the effluent port of the first reactor is connected to the supply port of the second reactor.
[2] The continuous polymerization apparatus according to the above [1], wherein the first and the second reactors are both suitable to conduct continuous bulk polymerization.
[3] The continuous polymerization apparatus according to the above [1] or [2], wherein said supply port of the second reactor or another supply port provided to the second reactor is connected to a supply source of an additional polymerization initiator.
[4] The continuous polymerization apparatus according to any one of the above [1] to [3], wherein an inner volume of the first reactor is different from an inner volume of the second reactor.
[5] The continuous polymerization apparatus according to any one of the above [1] to [4], wherein the effluent port of the first reactor is connected to the supply port of the second reactor by a connection line provided with a temperature regulating means.
[6] The continuous polymerization apparatus according to the above [5], wherein the first reactor is provided with a temperature detecting means for detecting a temperature in the first reactor; and
   the temperature regulating means of the connection line is controlled so that a temperature of the connection line is at substantially the same temperature as the temperature of the first reactor detected by the temperature detecting means.
[7] A process for producing a polymer composition using the continuous polymerization apparatus according to any of the above [1] to [6], which comprises
   a first polymerization step of supplying a raw material monomer and a polymerization initiator to said first reactor through the supply port of the first reactor from the supply source of the raw material monomer and the polymerization initiator to be subjected to continuous polymerization under an adiabatic condition in the first reactor, and taking a resultant intermediate composition from the effluent port of the first reactor; and
   a second polymerization step of supplying the intermediate composition to said second reactor through the supply port of the second reactor to be further subjected to continuous polymerization under an adiabatic condition in the second reactor, and taking a resultant polymer composition from the effluent port of the second reactor.

### Advantageous Effects of Invention

According to the present invention, there is provided a novel continuous polymerization apparatus. Further, according to the present invention, there is also provided a process for producing a polymer composition, which process is able to be conducted using such a continuous polymerization apparatus and to more efficiently produce a polymer composition suitable for obtaining a resin composition of high quality.

### Brief Description of Drawings

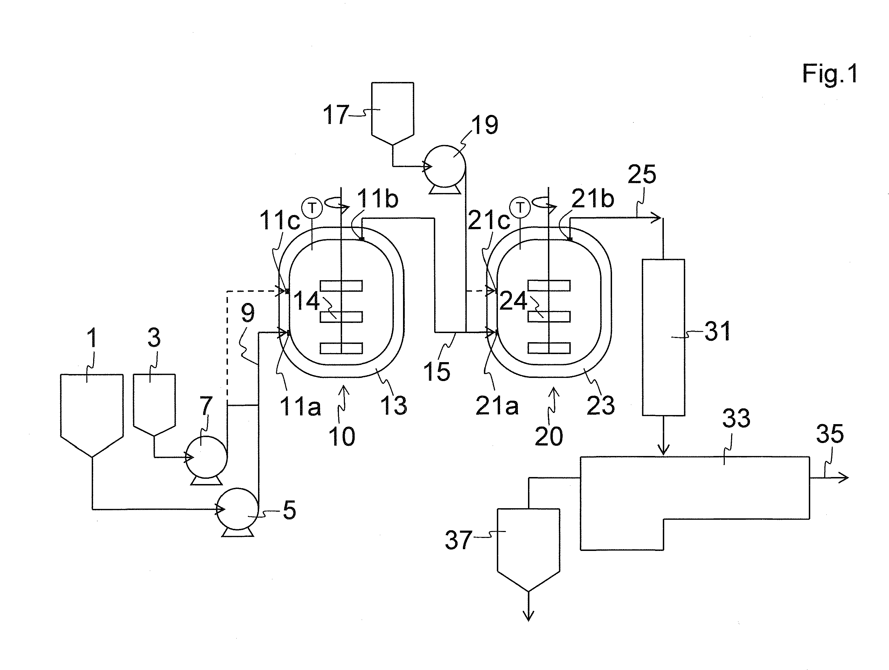

Fig. 1 shows a schematic view of a continuous polymerization apparatus in one embodiment of the present invention.

Following reference signs denote the following elements:
1 ... raw material monomer tank (supply source of raw material monomer)
3 ... polymerization initiator tank (supply source of polymerization initiator and, if necessary, of raw material monomer)
5 ... pump
7 ... pump
9 ... raw material monomer supply line
10 ... first reactor
11a ... supply port
11b ... effluent port
11c ... another supply port
13 ... jacket (temperature regulating means)
14 ... mixer
15 ... connection line
17 ... polymerization initiator tank (supply source of additional polymerization initiator and, if necessary, of raw material monomer)
19 ... pump
20 ... second reactor
21a ... supply port
21b ... effluent port
21c ... another supply port
23 ... jacket (temperature regulating means)
24 ... mixer
25 ... effluent line
31 ... preheater
33 ... devolatilizing extruder
35 ... discharge line
37 ... recovery tank
T ... temperature sensor (temperature detecting means)

### DETAILED DESCRIPTION OF THE EMBODIMENTS

A continuous polymerization apparatus of the present invention comprises at least two reactors, and continuous polymerization such as any of continuous bulk polymerization and continuous solution polymerization is conducted in each of the reactors. A continuous polymerization apparatus of the present invention will be understood as a continuous bulk polymerization apparatus when continuous bulk polymerization is conducted in all of the reactors, and understood as a continuous solution polymerization apparatus when continuous solution polymerization is conducted in all of the reactors. However, a continuous polymerization apparatus of the present invention is not limited thereto, but may be those wherein continuous bulk polymerization is conducted in one reactor (e.g. at least one former reactor) and continuous solution polymerization is conducted in another reactor (e.g. at least one latter reactor).

Hereinafter, one embodiment of the present invention will be described in detail with reference to Fig. 1.

A continuous polymerization apparatus in this embodiment comprises at least the first reactor 10 and the second reactor 20. These reactors 10 and 20 are both a reactor of a complete mixing type, and used to conduct continuous bulk polymerization in this embodiment.

More specifically, the first reactor 10 is provided with a supply port 11a and an effluent port 11b, and preferably further provided with a jacket 13 as a temperature regulating means for regulating a temperature of an outer surface of the reactor and a mixer 14 for mixing a content therein. Similarly, the second reactor 20 is provided with a supply port 21a and an effluent port 21b, and preferably further provided with a jacket 23 surrounding an outer surface of the reactor as a temperature regulating means for regulating a temperature of the outer surface of the reactor and a mixer 24 for mixing a content therein. The effluent ports 11b and 21b are located at the top of each of the reactors. On the other hand, the supply ports 11a and 21a may be generally located at an appropriate position of a lower part of each of the reactors, although this embodiment is not limited thereto. Each of these reactors 10 and 20 may be provided with a temperature sensor T as a temperature detecting means for detecting a temperature in the reactor.

The first reactor 10 and the second reactor 20 may have the same or different inner volume from each other. By making the inner volume of the first reactor and the inner volume of the second reactor different from each other, it is possible to effectively differentiate between the average residence times of the first reactor 10 and the second reactor 20.

The mixers 14 and 24 are suitable for substantially attaining complete mixing conditions in the reactors. These mixers may have any appropriate mixing blade(s), for example, may have blades of MIG impeller, MAXBLEND impeller (registered trademark, manufactured by Sumitomo Heavy Industries, Ltd.), paddle impeller, double helical ribbon impeller, FULLZONE impeller (registered trademark, manufactured by Kobelco Eco-Solutions Co., Ltd.) and so on. In order to increase the mixing effect in the reactor, it is preferable to provide the reactor with a baffle(s). However, this embodiment is not limited thereto, but any appropriate configuration may be used instead of the mixers 14 and 24 as long as complete mixing conditions can be substantially attained in the reactors.

In general, the reactors 10 and 20 are more preferable when they have a higher mixing efficiency. However, in view of avoiding introducing an unnecessary amount of heat
to the reactors by the mixing operation, it is preferable that the power of mixing is not more than necessary. The power of mixing is not specifically limited, but is preferably 0.5 to 20 kW/m³, and more preferably 1 to 15 kW/m³. As a viscosity of the reaction system becomes higher (or a content ratio of a polymer in the reaction system becomes higher), it is preferable to set the power of mixing at a larger level.

As shown in the drawing, the supply port 11a of the first reactor 10 is connected through a raw material monomer supply line 9 to a raw material monomer tank (a supply source of a raw material monomer) 1 and a polymerization initiator tank (a supply source of a polymerization initiator and, if necessary, of a raw material monomer) 3 via pumps 5 and 7, respectively. In this embodiment, the supply sources of the raw material monomer and the polymerization initiator are the raw material monomer tank 1 and the polymerization initiator tank 3, but the number of supply sources of the raw material monomer and the polymerization initiator, the forms of the raw material monomer and the polymerization initiator (in a case of a mixture, for example, a composition thereof) and so on are not particularly limited as long as the raw material monomer and the polymerization initiator can be supplied to the first reactor 10 appropriately. Although it is not necessary for this embodiment, another supply port 11c may be provided to the first reactor 10 and this supply port 11c may be connected to the polymerization initiator tank 3 via the pump 7 as shown by a dotted line in Fig. 1. The effluent port 11b of the first reactor 10 is connected to the supply port 21a of the second reactor 20 through a connection line 15. The effluent port 21b of the second reactor 20 is linked up to an effluent line 25. Thus, the first reactor 10 and the second reactor 20 are connected in series. There is preferably no pump on the connection line 15 between the effluent port 11b of the first reactor 10 and the supply port 21a of the second reactor 20.

It is not necessary for this embodiment, but the second reactor 20 may be connected to a polymerization initiator tank (a supply source of an additional polymerization initiator and, if necessary, of a raw material monomer) 17 via a pump 19. In this embodiment, the supply source of the additional polymerization initiator is the polymerization initiator tank 17, but the number of supply sources of the additional polymerization initiator, the form of the polymerization initiator (in a case of a mixture, for example, a composition thereof) and so on are not particularly limited as long as the additional polymerization initiator can be supplied to the second reactor 20 appropriately. In a case where the polymerization initiator tank 17 and the pump 19 are present, the supply port 21a of the second reactor 20 may be connected to the polymerization initiator tank 17 via the pump 19 through the connection line 15 as shown by a solid line in Fig. 1, or the second reactor 20 may be provided with another supply port 21c so that this supply port 21c is connected to the polymerization initiator tank 17 via the pump 19 as shown by, for example, a dotted line in Fig. 1.

The pumps 5 and 7 and, if present, the pump 19 are not particularly limited, but preferably pumps being able to set flow rates from the raw material monomer tank 1 and the polymerization initiator tank 3 and a flow rate from the polymerization initiator tank 17, if present, at constant values. More specifically, multiple reciprocating pumps are preferred, and more preferred are pulsation-free controlled-volume pumps such as a duplicate pulsation-free controlled-volume pump and a triplex pulsation-free controlled-volume pump. By using these, it is possible to control a supply amount (or a supply flow rate, which also applies hereinafter) of the raw material monomer and the polymerization initiator to the first reactor 10 and, if necessary, an additional supply amount of the polymerization initiator (or the raw material monomer and the polymerization initiator) to the second reactor 20.

Although it is not necessary for this embodiment, the connection line 15 for connecting the effluent port 11b of the first reactor 10 to the supply port 21a of the second reactor 20 is preferably provided with a jacket or the like (not shown in the drawings) surrounding an outer surface of the connection line 15 as a temperature regulating means for controlling a temperature of the connection line 15. Thereby, it is possible to control the temperature of the connection line 15 (more specifically, a temperature of the outer surface of the connection line, and thus a temperature in the connection line) depending on the temperature of the first reactor 10 and/or the temperature of the second reactor 20 and so on. In a case where the first reactor 10 is provided with the temperature sensor T as a temperature detecting means for detecting the temperature in the first reactor 10 as in this embodiment, the jacket (temperature regulating means) of the connection line 15 can be controlled so that the temperature of the connection line 15 is atsubstantially the same temperature as the temperature in the first reactor 10 detected by this temperature sensor T.

It is preferable that each of the members described in the above with reference to Fig. 1 is appropriately connected to a control unit (not shown in the drawing) so as to enable the control unit to control their operations. Thereby, in order to make the temperature of the outer surface of the reactor set for each of the jackets (temperature regulating means) 13 and 23 correspond to the temperature in the reactor detected by the temperature sensor (temperature detecting means) T with respect to each of the first reactor 10 and the second reactor 20, the apparatus is controllable by adjusting the supply amounts of the raw material monomer and the polymerization initiator to the first reactor 10 with the operation of the pumps 5 and 7 or by regulating the temperature of the outer surface of the reactor set for the jackets 13 and 23; and also, in a case where the polymerization initiator tank 17 and the pump 19 are present, the apparatus is controllable by adjusting the additional supply amount of the polymerization initiator (or the raw material monomer and the polymerization initiator) to the second reactor 20 with the operation of the pump 19. Further, in order to make the temperature in the connection line 15 substantially equal to the temperature in the first reactor 10 detected by the temperature sensor (temperature detecting means) T, the apparatus is controllable by adjusting the temperature of the outer surface of the connection line 15 set for the jacket (temperature regulating means, not shown in the drawing) surrounding the connection line 15. It is preferable that the temperature in the connection line 15 is actually measured by the temperature detecting means for detecting the connection line 15. However, in some cases depending on the polymerization reaction conditions in the first reactor 10, due to some causes such as that all of the supplied polymerization initiator is spent, an intermediate composition (hereinafter described) taken from the effluent port 11b does not let the polymerization reaction proceed in the connection line 15, that is, no heat of the polymerization reaction is generated in the connection line 15. In such case, the temperature of the jacket surrounding the connection line 15 is set at substantially the same temperature as the temperature in the first reactor 10, so that the temperature in the connection line 15 can become substantially the same temperature as the temperature in the first reactor 10, and considering the temperature in the connection line 15 as substantially the same temperature as the temperature of the jacket surrounding the connection line 15 is allowable.

The jackets 13 and 23 surround almost the whole of the reactors 10 and 20, respectively, to appropriately heat or retain the heat of the reactors 10 and 20 by introducing steam, hot water, organic heat medium or the like from a heat medium supply route (not shown in the drawing). The temperature of the jackets 13 and 23 is able to be appropriately regulated with a temperature or pressure of the heat medium to be introduced. The heat medium introduced into the jackets 13 and 23 is removed from a heat medium discharge route (not shown in the drawing). The temperature and/or pressure of the jackets 13 and 23 is detected by a sensor such as a temperature sensor (not shown in the drawing) located on the heat medium discharge route. The point of location of a sensor such as the temperature sensor is not particularly limited, but it may be located, for example, on the heat medium supply route, or in the jackets 13 and 23. When the connection line 15 is provided with the jacket, the jacket of the connection line 15 may have a similar structure to these jackets 13 and 23.

For the polymerization reaction in the reactors 10 and 20, it is required to proceed at a generally constant temperature in each of the reactors 10 and 20 in view of obtaining a polymer with a constant quality. Therefore, the above described temperature regulating means (jackets 13 and 23) is controlled at a constant temperature which has been set beforehand, so that the temperature inside the reactors 10 and 20 can be maintained respectively at a generally constant temperature.

The setting temperature of the above described temperature regulating means (jackets 13 and 23) is transmitted to a supply flow rate control means,which is hereinafter described, to be used as data for determining whether control of the supply flow rate with the monomer supply means (pump 5) and/or the initiator supply means (pump 7 and, if present, pump 19) is necessary or not. The setting temperature of the above described temperature regulating means (jackets 13 and 23) can be regulated by controlling the temperature or pressure of the above described heat medium.

As to the supply flow rate control means, an example thereof is a control unit (not shown in the drawing) provided with CPU, ROM, RAM and so on.

The ROM of the control unit is a device for storing a program which controls the pumps 5 and 7 and, if present, the pump 19 and so on. The RAM of the control unit is a device for temporarily storing data of the temperatures in the reactors 10 and 20 detected by the temperature sensor T, data of the setting temperatures of the jackets 13 and 23, data of, if present, the setting temperature of the jacket of the connection line 15, and so on in order to execute the above program.

The CPU of the control unit executes the program stored in the ROM based on data such as the data of the temperatures in the reactors 10 and 20 and the data of the setting temperatures of the jackets 13 and 23 stored in the above RAM so that the supply flow rates of the raw material monomer and/or the polymerization initiator to the reactors 10 and 20 are controlled by the monomer supply means (pump 5) and/or the initiator supply means (pump 7 and, if present, pump 19). In a case where the connection line 15 is provided with the jacket as the temperature regulating means, the CPU of the control unit executes the program stored in the ROM (which may be either a part of the above program or another program than the above program) based on data such as the data of the temperatures in the reactors 10 and 20 and the data of the setting temperature of the jacket (not shown in the drawing) of the connection line 15 stored in the above RAM so that the setting temperature of the jacket of the connection line 15 can be controlled.

An example of the control by the supply flow rate control means (control unit) will be described below.

When the temperature in the reactor 10 detected by the temperature sensor T exceeds the setting temperature of the jacket 13 as the temperature regulating means, the CPU executes the program in the ROM to control, for example, the pump 7 so as to decrease the supply flow rate of the polymerization initiator into the reactor 10. In a case where the polymerization initiator tank 17 and the pump 19 are present, when the temperature in the reactor 20 detected by the temperature sensor T exceeds the setting temperature of the jacket 23 as the temperature regulating means while the pump 19 supplies the polymerization initiator to the reactor 20 to conduct the polymerization, the CPU executes the program in the ROM to control, for example, the pump 19 so as to decrease the supply flow rate of the polymerization initiator into the reactor 20. By conducting such control, polymerization heat generated in the reactors 10 and/or 20 can be decreased, and thereby the temperatures in the reactors 10 and/or 20 can be lowered.

On the other hand, when the temperature in the reactor 10 is below the setting temperature of the jacket 13, the CPU executes the program in the ROM to control, for example, the pump 7 so as to increase the supply flow rate of the polymerization initiator into the reactor 10. In a case where the polymerization initiator tank 17 and the pump 19 are present, when the temperature in the reactor 20 is below the setting temperature of the jacket 23 while the pump 19 supplies the polymerization initiator to the reactor 20 to conduct the polymerization, the CPU executes the program in the ROM to control, for example, the pump 19 so as to increase the supply flow rate of the polymerization initiator into the reactor 20. By conducting such control, polymerization heat generated in the reactors 10 and/or 20 can be increased, and thereby the temperatures in the reactors 10 and/or 20 can be raised.

For example, when the control over the pump 7 and, if present, the pump 19 for the polymerization reaction in the reactors 10 and 20 results in remarkable decrease in the total supply flow rate into the reactors 10 and 20, it is preferable to not only control the pump 7 and, if present, the pump 19 so as to decrease the flow rate of the polymerization initiator, but also to control the pump 5 so as to increase the flow rate of the raw material monomer at the same time.

Further, as another example of the control, the following control is noted. That is, when the temperature in the reactor 10 detected by the temperature sensor T exceeds the setting temperature of the jacket 13 as the temperature regulating means, the pump 5 is controlled to increase the flow rate of the raw material monomer, so that the relative flow rate of the polymerization initiator into the reactor 10 is decreased. By conducting such control, the temperature in the reactor 10 can also be lowered.

A ratio of the supply flow rate of the raw material monomer and the flow rate of the polymerization initiator can be appropriately set depending on kinds of the polymer generated, kinds of polymerization initiator used, and so on.

Also, degree of increase or decrease in the supply flow rate of the raw material monomer and/or the supply flow rate of the polymerization initiator can be appropriately set depending on kinds of the polymer generated, kinds of the polymerization initiator used, and so on. However, in a case what is supplied to the reactors 10 and 20 by the initiator supply means is not the polymerization initiator only, but the raw material monomer comprising the polymerization initiator, it is necessary to consider a content ratio of the polymerization initiator in the raw material monomer comprising polymerization initiator to control the supply flow rate of the polymerization initiator.

Further, as still another example of the control, the following control is noted for a case where the connection line 15 is provided with the jacket as the temperature regulating means. That is, when the temperature in the reactor 10 detected by the temperature sensor T is different from the temperature in the connection line 15 (conveniently, the setting temperature of the jacket of the connection line 15) by more than, for example, ± 5°C, the setting temperature of the jacket of the connection line 15 is regulated so that the temperature in the connection line 15 (conveniently, the setting temperature of the jacket of the connection line 15) becomes substantially the same temperature as the temperature of the reactor 10.

Although it is not necessary for this embodiment, a preheater 31 and a devolatilizing extruder 33 may be located downstream of the effluent line 25. There may be a pressure adjusting valve (not shown in the drawings) provided between the preheater 31 and the devolatilizing extruder 33. An extruded object after devolatilization is discharged from a discharge line 35.

As the preheater 31, any appropriate heater can be used as long as it is able to heat a viscous fluid. As the devolatilizing extruder 33, a single or multi screw devolatilizing extruder can be used.

Further, there may be a recovery tank 37 for storing the raw material monomer which is separated and recovered from a volatile component (comprising unreacted raw material, mainly) that was separated using the devolatilizing extruder 33.

Next, a process for producing a polymer composition conducted using such an apparatus will be described. In this embodiment, a case of conducting continuous polymerization of a methacrylic ester monomer, in other words, a case of producing a methacrylic ester polymer will be described as an example, although the present invention is not limited thereto.

### ● Preparation

At first, the raw material monomer, the polymerization initiator and so on are prepared.

As the raw material monomer, a methacrylic ester monomer is used in this embodiment.

Examples of the methacrylic ester monomer are
- alkyl methacrylate (of which alkyl group has 1 to 4 carbons) alone, or
- a mixture of not less than 80% by weight of alkyl methacrylate (of which alkyl group has 1 to 4 carbons) and not more that 20% by weight of other vinyl monomer copolymerizable therewith.

Examples of alkyl methacrylate (of which alkyl group has 1 to 4 carbons) include methyl methacrylate, ethyl methacrylate, n-propyl methacrylate, isopropyl methacrylate, n-butyl methacrylate, t-butyl methacrylate, sec-butyl methacrylate, isobutyl methacrylate, and so on. Among them, methyl methacrylate is preferred. The above described examples of alkyl methacrylate may be used alone or in combination of at least two of them.

Examples of copolymerizable vinyl monomer include methacrylic esters such as benzyl methacrylate and 2-ethylhexyl methacrylate (except for the above described alkyl methacrylate (of which alkyl group has 1 to 4 carbons)); acrylic esters such as methyl acrylate, ethyl acrylate, propyl acrylate, butyl acrylate, and 2-ethylhexyl acrylate; unsaturated carboxylic acids or acid anhydrides thereof such as acrylic acid, methacrylic acid, maleic acid, itaconic acid, maleic acid anhydride, and itaconic acid anhydride; hydroxy group-containing monomers such as 2-hydroxyethyl acrylate, 2-hydroxypropyl acrylate, monoglycerol acrylate, 2-hydroxyethyl methacrylate, 2-hydroxypropyl methacrylate, and monoglycerol methacrylate; nitrogen-containing monomers such as acrylamide, methacrylamide, acrylonitrile, methacrylonitrile, diacetoneacrylamide, and dimethylaminoethyl methacrylate; epoxy group-containing monomers such as allyl glycidyl ether, glycidyl acrylate, and glycidyl methacrylate; styrene based monomers such as styrene and α-methylstyrene.

As the polymerization initiator, for example, a radical initiator is used in this embodiment.

Examples of a radical initiator include azo compounds such as azobisisobutyronitrile, azobisdimethylvaleronitrile, azobiscyclohexanenitrile, 1,1'-azobis(1-acetoxy-1-phenylethane), dimethyl 2,2'-azobisisobutylate, and 4,4'-azobis-4-cyanovaleric acid; organic peroxides such as benzoyl peroxide, lauroyl peroxide, acetyl peroxide, caprylyl peroxide, 2,4-dichlorobenzoyl peroxide, isobutyl peroxide, acetyl cyclohexylsulfonyl peroxide, t-butyl peroxypivalate, t-butyl peroxyneodecanoate, t-butyl peroxyneoheptanoate, t-butyl peroxy-2-ethylhexanoate, 1,1-di(t-butylperoxy)cyclohexane, 1,1-di(t-butylperoxy)-3,3,5-trimethylcyclohexane, 1,1-di(t-hexylperoxy)-3,3,5-trimethylcyclohexane, isopropyl peroxydicarbonate, isobutyl peroxydicarbonate, s-butyl peroxydicarbonate, n-butyl peroxydicarbonate, 2-ethylhexyl peroxydicarbonate, bis(4-t-butylcyclohexyl) peroxydicarbonate, t-amyl peroxy-2-ethylhexanoate, 1,1,3,3-tetramethyl butyl peroxyethylhexanoate, 1,1,2-trimethyl propyl peroxy-2-ethylhexanoate, t-butyl peroxy isopropyl monocarbonate, t-amyl peroxy isopropyl monocarbonate, t-butyl peroxy-2-ethylhexyl carbonate, t-butyl peroxy allyl carbonate, t-butyl peroxy isopropyl carbonate, 1,1,3,3-tetramethyl butyl peroxy isopropyl monocarbonate, 1,1,2-trimethyl propyl peroxy isopropyl monocarbonate, 1,1,3,3-tetramethyl butyl peroxy isononate, 1,1,2-trimethyl propyl peroxyisononate, and t-butyl peroxybenzoate.

These polymerization initiators may be used alone or in combination of at least two of them.

The polymerization initiator is selected according to the kinds of the polymer generated and the raw material monomer used. For example, while the present invention is not particularly limited, radical polymerization initiators having a half-life of not more than one minute at the polymerization temperature are preferable. When the half-life at the polymerization temperature is at most one minute, the reaction rate is suitable, thus the initiator is suitable for the polymerization reaction in the continuous polymerization apparatus.

The supply amount of the polymerization initiator (radical initiator) is not particularly limited, but generally 0.001 to 1% by weight with respect to the raw material monomer (the raw material monomer eventually supplied to the reactor 10). In a case where the polymerization initiator tank 17 and the pump 19 are present in addition to the polymerization initiator tank 3 and the pump 7, the polymerization initiator can be supplied separately into the first reactor 10 and the second reactor 20. When the polymerization initiator tank 17 supplies the mixture of the raw material monomer and the polymerization initiator to the second reactor 20 by the pump 19, the total supply amount of the polymerization initiator supplied to the reactor 10 and the reactor 20 is within the above range with respect to the sum of the raw material monomer eventually supplied to the reactor 10 and the raw material monomer additionally supplied to the reactor 20.

In addition to the raw material monomer and the polymerization initiator described above, any appropriate other component(s), for example, a chain transfer agent, a rubbery polymer such as butadiene and styrene-butadiene rubber (SBR), and so on may be used. The chain transfer agent is used for adjusting a molecular weight of the polymer generated.

As to the chain transfer agent, either monofunctional or polyfunctional chain transfer agents can be used. More specifically, examples thereof include alkyl mercaptans such as n-propyl mercaptan, isopropyl mercaptan, n-butyl mercaptan, t-butyl mercaptan, n-hexyl mercaptan, n-octyl mercaptan, 2-ethylhexyl mercaptan, n-dodecyl mercaptan, and t-dodecyl mercaptan; aromatic mercaptans such as phenyl mercaptan and thiocresol; mercaptans having 18 or less carbons such as ethylene thioglycol; polyalcohols such as ethylene glycol, neopentyl glycol, trimethylolpropane, pentaerythritol, dipentaerythritol, tripentaerythritol, and sorbitol; those of which hydroxyl group is esterified with thioglycolic acid or 3-mercaptopropionic acid, 1,4-dihydronaphthalene, 1,4,5,8-tetrahydronaphthalene, β-terpinene, terpinolene, 1,4-cyclohexadiene, hydrogen sulfide and so on. These may be used alone or in combination of at least two of them.

The supply amount of the chain transfer agent is not particularly limited since it varies depending on the kind of the chain transfer agent used and so on. For example, in a case of using mercaptans, it is preferably 0.01 to 3% by weight, and more preferably 0.05 to 1% by weight with respect to the raw material monomer (the raw material monomer eventually supplied to the reactor 10).

In the raw material monomer tank 1, the raw material monomer (one kind or a mixture of two or more kinds) as described above is appropriately prepared (together with other component(s) such as the chain transfer agent as the case may be). In the polymerization initiator tank 3, the polymerization initiator as described above is appropriately prepared with the raw material monomer if necessary (together with other component(s) such as the chain transfer agent as the case may be). The polymerization initiator tank 3 may store the polymerization initiator alone or in the form of the mixture of the raw material monomer and the polymerization initiator (may further comprise other component(s) such as the chain transfer agent as the case may be). In a case of using the polymerization initiator tank 17, in the polymerization initiator tank 17, the polymerization initiator as described above is appropriately prepared with the raw material monomer if necessary (together with other component(s) such as the chain transfer agent as the case may be). The polymerization initiator tank 17 may store the polymerization initiator alone or in the form of the mixture of the raw material monomer and the polymerization initiator (may further comprise other component(s) such as the chain transfer agent as the case may be). However, in a case where the polymerization initiator tank 17 is connected to the supply port 21c via the pump 19, storing of the polymerization initiator alone raises a concern of local proceeding of the polymerization reaction in the reactor 20 since the polymerization initiator is solely supplied to the reactor 20. On the contrary, storing in the form of the mixture of the raw material monomer and the polymerization initiator is able to solve such concern since the polymerization initiator is mixed with a part of the raw material monomer beforehand.

### ● First polymerization Step

The raw material monomer and the polymerization initiator are supplied to the first reactor 10 through the supply port 11a from the raw material monomer tank 1 and the polymerization initiator tank 3 as the supply source of the raw material monomer and the polymerization initiator. More specifically, the raw material monomer is supplied from the raw material monomer tank 1 by the pump 5, and the polymerization initiator (preferably, the mixture of the raw material monomer and the polymerization initiator, which is also simply referred to as the polymerization initiator herein) is supplied from the polymerization initiator tank 3 by pump 7, and they merge together through the raw material supply line 9 into the first reactor 10 via the supply port 11a. Also, the polymerization initiator may be supplied from the polymerization initiator tank 3 by pump 7 to the first reactor 10 via the supply port 11c as shown by the dotted line in Fig. 1.

For supplying the polymerization initiator to the first reactor 10, when the mixture of the raw material monomer and the polymerization initiator is prepared in the polymerization initiator tank 3 and supplied therefrom, it is preferable to adjust a ratio A : B in a range from 80:20 to 98:2 wherein A represents the supply flow rate (kg/h) of the raw material monomer from the raw material monomer tank 1, and B represents the supply flow rate (kg/h) of the mixture of the raw material monomer and the polymerization initiator (of which content ratio of the polymerization initiator is 0.002 to 10% by weight) from the polymerization initiator tank 3.

The temperature of the raw material monomer and the polymerization initiator supplied to the first reactor 10 is not particularly limited. However, this is one of the factors which may change the polymerization temperature by losing a heat balance in the reactor, and therefore it is preferable to adjust that temperature appropriately by a heater/cooler (not shown in the drawing) before the supply to the reactor 10.

The raw material monomer and the polymerization initiator supplied to the first reactor 10 as described in the above are subjected to continuous polymerization, continuous bulk polymerization in this embodiment (in other words, polymerization with no solvent), under an adiabatic condition (condition with substantially no heat transfer to or from the outside of the reactor) in the first reactor 10. This first polymerization step only has to proceed

partially, and an intermediate composition is taken from the effluent port 11b of the first reactor 10.

In the first polymerization step, the continuous polymerization can be conducted under a condition in which the reactor is filled with the reaction mixture while substantially no gas phase is present (hereinafter referred to as a fully filled condition). This is especially suitable for the continuous bulk polymerization. The fully filled condition can prevent beforehand the problems such as that gel adheres to and grows on the inner surface of the reactor, and that this gel is admixed into the reaction mixture to degrade the quality of a polymer composition obtained in the end. Further, the fully filled condition enables all of the inner volume of the reactor to be used as a reaction space, and thereby a high productivity can be attained.

Since the effluent port 11b of the first reactor 10 is located at the reactor's top, the fully filled condition is conveniently realized simply by conducting the supply to and the taking from the first reactor 10 continuously.

Further in the first polymerization step, the continuous polymerization is conducted under adiabatic conditions. This is especially suitable for the continuous bulk polymerization. The adiabatic condition can prevent beforehand the problems such as that gel adheres to and grows on the inner surface of the reactor, and that this gel is admixed into the reaction mixture to degrade quality of a polymer composition obtained in the end. Further, the adiabatic condition enables the polymerization reaction to become stable, and self regulating characteristics for suppressing a runaway reaction can be brought about.

The adiabatic condition can be realized by making the temperature of the inside of the first reactor 10 and the temperature of the outer surface thereof generally equal to each other. More specifically, this can be realized, with the use of the above described control unit (not shown in the drawings), by adjusting the supply amounts of the raw material monomer and the polymerization initiator to the first reactor 10 with operating the pumps 5 and 7 such that the temperature of the outer surface of the first reactor 10 set for the jacket (temperature regulating means) 13 and the temperature in the first reactor 10 detected by the temperature sensor (temperature detecting means) T correspond to each other. It is not preferable to set the temperature of the outer surface of the reactor much higher than the temperature in the reactor since it adds an extra amount of heat into the reactor. The smaller the difference between the temperature in the reactor and the temperature of the outer surface of the reactor is, the better it is. More specifically, it is preferable to adjust the temperature difference within the range of ± 5°C.

The heat generated in the first reactor 10 such as polymerization heat and mixing heat is generally carried away on taking the intermediate composition from the first reactor 10. The amount of the heat carried away by the intermediate composition is determined by the flow rate and the specific heat of the intermediate composition and the temperature of the polymerization reaction.

The temperature of the continuous polymerization in the first polymerization step is understood as the temperature in the first reactor 10 (detected by the temperature sensor T). This temperature changes according to various conditions until it reaches a static state. Although is not particularly limited, it can be, for example, about 100 to 180°C.

The pressure of the continuous polymerization in the first polymerization step is understood as the pressure in the first reactor 10. This pressure is a pressure not less than a vapor pressure of the raw material monomer at the temperature in the reactor to prevent gas of the raw material monomer from generating in the reactor and is generally about 1.0 to 2.0 MPa in gauge pressure.

The time period for being subjected to the continuous polymerization in the first polymerization step is understood as the average residence time in the first reactor 10. The average residence time can be set according to the productivity of the polymer in the intermediate composition and so on and is not particularly limited but can be, for example, from 15 minutes to 6 hours. This average residence time can be adjusted by using the pumps 5 and 7 to change the supply amount (supply flow rate) of the raw material monomer or the like to the first reactor 10. However, since the average residence time depends in a large part on the inner volume of the first reactor 10, how the inner volume of the first reactor 10 and the inner volume of the second reactor 20 are designed is important as hereinafter described.

As described in the above, the intermediate composition is taken from the effluent port 11b of the first reactor 10. The obtained intermediate composition comprises the generated polymer and the unreacted raw material monomer and may further comprise the unreacted polymerization initiator, decomposed substance of the polymerization initiator, and so on.

Although this embodiment is not limited thereto, the polymerization rate in the intermediate composition is, for example, 5 to 80% by weight. The polymerization rate in the intermediate composition generally corresponds to the content ratio of the polymer in the intermediate composition.

### ● Second polymerization Step

The second polymerization step is conducted in series with and following the first polymerization step.

After the intermediate composition obtained as described in the above has been taken from the effluent port 11b of the first reactor, it is supplied to the second reactor 20 from the supply port 21a through the connection line 15. Then, the intermediate composition is further subjected to continuous polymerization, continuous bulk polymerization in this embodiment, under an adiabatic condition in the first reactor 20. This second polymerization step is to let the polymerization reaction proceed to the desired polymerization rate, and a polymer composition (or polymerization syrup) is taken from the effluent port 21b of the second reactor 20.

Hereinafter, the second polymerization step will be described mainly with respect to different points from the first polymerization step, and explanations similar to those for the first polymerization step apply unless otherwise explained.

Although it is not necessary for this embodiment, the polymerization initiator tank 17 and the pump 19 may be used, if necessary. In a case of using the polymerization initiator tank 17 and the pump 19, the additional (or fresh) polymerization initiator (preferably, the mixture of the raw material monomer and the polymerization initiator) is supplied from the polymerization initiator tank 17 by the pump 19 through the connection line 15 to the second reactor 20 via the supply port 21a or the other supply port 21c, and thereby the intermediate composition is added with the additional polymerization initiator. The temperature of the polymerization initiator supplied to the second reactor 20 from the polymerization initiator tank 17 is not particularly limited. However, this is one of factors which may change in the polymerization temperature by losing a heat balance in the reactor, and therefore it is preferable to adjust that temperature appropriately by a heater/cooler (not shown in the drawing) before the supply to the reactor 20.

Also it is not necessary to this embodiment, but in a case where the connection line 15 is provided with the jacket as the temperature regulating means, it is preferable to adjust the setting temperature of the jacket of the connection line 15 such that the temperature of the connection line 15 and the temperature in the first reactor 10 substantially correspond to each other. Thereby, the supply temperature of the intermediate composition to the second reactor 20 can be adjusted, and the continuous polymerization in the second polymerization step can be conducted more stably by keeping the supply temperature, constantly. It is preferable to adjust the temperature in the connection line 15 to an equivalent temperature to the polymerization temperature in the first polymerization step and so that a change in the pressure and viscosity of the intermediate composition in the connection line 15 can be decreased and the supply of the intermediate composition to the second reactor 20 can be conducted more stably.

For supplying the polymerization initiator to the second reactor 20, when the mixture of the raw material monomer and the polymerization initiator is prepared in the polymerization initiator tanks 3 and 17 and supplied therefrom, it is preferable to adjust a ratio A : (B₁ + B₂) in a range from 80:20 to 98:2 and a ratio B₁ : B₂ in a range from 10:90 to 90:10 wherein A represents the supply flow rate (kg/h) of the raw material monomer from the raw material monomer tank 1, B₁ represents the supply flow rate (kg/h) of the mixture of the raw material monomer and the polymerization initiator (of which content ratio of the polymerization initiator is 0.002 to 10% by weight) from the polymerization initiator tank 3, and B₂ represents a supply flow rate (kg/h) of the mixture of the raw material monomer and the polymerization initiator (of which content ratio of the polymerization initiator is 0.002 to 10% by weight) from the polymerization initiator tank 17.

Also in the second polymerization step, the continuous polymerization can be conducted under a fully filled condition. This is especially suitable to the continuous bulk polymerization. The fully filled condition can prevent beforehand the problems such as that gel adheres to and grows on the inner surface of the reactor and that this gel is admixed into the reaction mixture to degrade the quality of the polymer composition obtained in the end. Further, the fully filled condition enables all of the inner volume of the reactor to be used as a reaction space and thereby a high productivity can be attained.

Since the effluent port 21b of the second reactor 20 is located at the reactor's top, the fully filled condition is conveniently realized simply by conducting the supply to and the taking from the second reactor 20 continuously.

Also, further in the second polymerization step, the continuous polymerization is conducted under the adiabatic condition. This is especially suitable for the continuous bulk polymerization. The adiabatic condition can prevent beforehand the problems such as that gel adheres to and grows on the inner surface of the reactor and that this gel is admixed into the reaction mixture to degrade the quality of the polymer composition obtained in the end. Further, the adiabatic condition enables the polymerization reaction to become stable and self regulating characteristics for suppressing a runaway reaction can be brought about.

The adiabatic condition can be realized by making the temperature of the inside of the second reactor 20 and the temperature of the outer surface thereof generally equal to each other. More specifically, this can be realized, with the use of the above described control unit (not shown in the drawing), by adjusting the supply amounts of the raw material monomer and the polymerization initiator to the second reactor 20 with operating the pumps 5 and 7 and, if present, the pump 19 such that the temperature of the outer surface of the second reactor 20 set for the jacket (temperature regulating means) 23 and the temperature in the second reactor 20 detected by the temperature sensor (temperature detecting means) T correspond to each other. It is not preferable to set the temperature of the outer surface of the reactor much higher than the temperature in the reactor since it adds an extra amount of heat into the reactor. The smaller the difference between the temperature in the reactor and the temperature of the outer surface of the reactor is, the better it is. More specifically, it is preferable to adjust the temperature difference within the range of ± 5°C.

The heat generated in the second reactor 20 such as polymerization heat and mixing heat is generally carried away on taking the polymer composition from the second reactor 20. The amount of heat carried away by the polymer composition is determined by the flow rate and the specific heat of the polymer composition and the temperature of the polymerization reaction.

The temperature of the continuous polymerization in the second polymerization step is understood as the temperature in the second reactor 20. This temperature is, for example, about 100 to 200°C. The temperature in the second polymerization step may be equal to the temperature in the first polymerization step but is preferably higher than it.

The pressure of the continuous polymerization in the second polymerization step is understood as the pressure in the second reactor 20. This pressure is generally about 1.0 to 2.0 MPa in gauge pressure and may be equal to the pressure in the first polymerization step.

The time period for being subjected to the continuous polymerization in the second polymerization step is understood as the average residence time in the second reactor 20. The average residence time can be set according to the productivity of the polymer in the polymer composition and so on and is not particularly limited but can be for example, from 15 minutes to 6 hours. The average residence time in the second polymerization step may be equal to the average residence time in the first polymerization step, but is preferably different from it. The average residence time in the second polymerization step can be adjusted by using the pumps 5 and 7 and, if present, the pump 19 to change the supply amount (supply flow rate) of the raw material monomer or the like to the second reactor 20. However, since the average residence time depends in a large part on the inner volume of the second reactor 20, how the inner volume of the first reactor 10 and the inner volume of the second reactor 20 are designed is important as hereinafter described.

As described in the above, the polymer composition is taken from the effluent port 21b of the second reactor 20. The obtained polymer composition comprises the generated polymer and may further comprise the unreacted raw material monomer, the unreacted polymerization initiator, decomposed substance of the polymerization initiator, and so on.

Although this embodiment is not limited thereto, the polymerization rate in the polymer composition is, for example, 30 to 90% by weight. The polymerization rate in the polymer composition generally corresponds to the content ratio of the polymer in the polymer composition. The higher the polymerization rate, the higher the productivity of the polymer, but also the higher the viscosity of the composition from the intermediate composition to the polymer composition, which results in an increase in the power necessary for mixing. The lower the polymerization rate, the lower the productivity of the polymer, which results in a larger load for recovering the unreacted raw material monomer. Therefore, it is preferable to set an appropriate polymerization rate as a target or a guide.

In general, the following tendency is observed: the higher the polymerization temperature, the lower the syndiotacticity of the obtained polymer, the lower the heat resistance of a resin composition obtained in the end. Thus, it is more preferable to conduct the polymerization at a lower temperature in view of obtaining a resin composition having a higher heat resistance. However, if continuous polymerization is conducted in one stage only at a lower temperature with the use of the conventional continuous polymerization apparatus (JP 07-126308 A and JP 2006-104282 A), it requires a long time period for attaining the desired polymerization ratio, and therefore requires a large reactor and thus a large space to realize the long average residence time, so that it is not efficient. Further, when the average residence time becomes unnecessarily long, a larger amount of oligomer such as dimer and trimer is generated, which raises a concern of lowering the heat resistance of the resin composition obtained from the polymer composition.

In addition, the amount of the polymerization initiator can be determined according to other conditions such as the polymerization temperature and the average residence time. When the amount of the polymerization initiator becomes large, a larger amount of a polymerization initiating end (polymer end) which is unstable is left in the polymer composition, so that the heat stability of the resin composition obtained in the end tends to be lowered.

In contrast, by conducting the continuous polymerization in two stages as in this embodiment, the polymerization reaction conditions, more specifically, the temperature, the time period (average residence time), the amount of the polymerization initiator (a ratio of the polymerization initiator to the raw material monomer) and so on can be set for the first polymerization step and the second polymerization step independently.

For example, it is possible in this embodiment to conduct the continuous polymerization in the first polymerization step at a relatively lower temperature and then to further conduct the continuous polymerization in the second polymerization step at a relatively higher temperature. More specifically, the additional polymerization initiator added to the second reactor can bring about a higher temperature of the continuous polymerization of the second polymerization step than a temperature of the continuous polymerization of the first polymerization step. As a result, this embodiment can be efficiently conducted in a smaller space compared with a case of conducting the continuous polymerization in one stage at a low temperature, and can obtain the polymer composition which is more suitable for obtaining a resin composition of high heat resistance compared with a case of conducting the continuous polymerization in one stage at a high temperature.

Further, for example, it is possible in this embodiment to differentiate between the time period of the continuous polymerization in the first polymerization step and the time period of the continuous polymerization in the second polymerization step. More specifically, designing of the inner volume of the first reactor and the inner volume of the second reactor different from each other can differentiate the average residence time in the first reactor from the average residence time in the second reactor. It is supposed that the additional polymerization initiator added to the second reactor together with the raw material monomer can also differentiate the average residence time in the first reactor from the average residence time in the second reactor. When the average residence time in the first reactor is longer than the average residence time in the second reactor, the polymerization initiator can be supplied to the first reactor at a lesser amount, so that the polymer composition which is suitable for obtaining a resin composition of high heat stability can be obtained. Instead, when the average residence time in the second reactor is longer than the average residence time in the first reactor, the polymerization initiator can be supplied to the second reactor at a lesser amount, so that the polymer composition which is suitable for obtaining a resin composition of high heat stability can be obtained.

How the polymerization reaction conditions are set for each of the first polymerization step and the second polymerization step may vary according to the polymer generated, the raw material monomer and the polymerization initiator used, the heat resistance, heat stability and productivity desired, and so on.

### ● Devolatilization Step

As described above, the polymer composition (polymerization syrup) taken from the effluent port 21b of the second reactor 20 may comprise the unreacted raw material monomer and polymerization initiator and so on in addition to the generated polymer. Although this embodiment is not limited thereto, such polymer composition is preferably subjected to, for example, devolatilization to separate and recover the raw material monomer.

More specifically, the polymer composition is transferred to the preheater 31 through the effluent line 25. The polymer composition in the preheater 31 is added with a part or all of an amount of heat necessary to volatilize the volatile component which is mainly composed of the unreacted raw material monomer. Then, the polymer composition is transferred to the devolatilizing extruder 33 via the pressure adjusting valve (not shown in the drawing) and the volatile component is at least partially removed in the devolatilizing extruder and a residual extruded object is formed into pellets and discharged from the discharge line 35. Thereby, the resin composition comprising a methacrylic ester polymer is produced in the form of pellets.

As a method for transferring the above polymer composition, a method described in JP 4-48802 B is preferable. As a method of using a devolatilizing extruder, methods described in, for example, JP 3-49925 A, JP 51-29914 B, JP 52-17555 B, JP 1-53682 B, JP 62-89710 A and so on are preferable.

Further, during or after devolatilization of the polymer composition in the devolatilizing extruder described above, the polymer composition or the extruded object can be added with a lubricating agent such as higher alcohols and higher fatty acid esters, an ultraviolet absorber, a heat stabilizer, a colorant, an antistatic agent and so on in order to incorporate them into the resin composition, if necessary.

The volatile component removed in the devolatilizing extruder 33 consists primarily of the unreacted raw material monomer and can include impurities; e.g. impurities originally contained in the raw material monomer, additives used if necessary, volatile by-product(s) generated in the process of polymerization, oligomers such as dimer and trimer, decomposed substance of the polymerization initiator, and so on. In general, a larger amount of the impurities makes the obtained resin composition colored, which is not preferable. Then, the volatile component removed in the devolatilizing extruder 33 (which consists primarily of the unreacted raw material monomer and can include impurities as described above) may be passed through a monomer recovery column (not shown in the drawing) and be treated by means of distillation, adsorption and so on in the monomer recovery column to remove the impurities from the above described volatile component. Thereby, the unreacted raw material monomer can be recovered with high purity, so that it can be suitably reused as the raw material monomer for polymerization. For example, continuous distillation is conducted in the monomer recovery column to recover the unreacted raw material monomer with high purity as a distillate liquid from the top of the monomer recovery column, and it may be transferred and recycled to the raw material monomer tank 1 after it is preserved in the recovery tank 37 once, or it may be transferred and recycled to the raw material monomer tank 1 without being preserved in the recovery tank 37. On the other hand, the impurities removed in the monomer recovery column may be disposed as waste.

In order to prevent the recovered raw material monomer from causing the polymerization reaction in the recovery tank 37 and/or the raw material monomer tank 1, it is preferable that a polymerization inhibitor exists in the recovery tank 37 or the raw material monomer tank 1 at a ratio of, for example, 2 to 8 ppm by weight with respect to the raw material monomer, and more preferably, in addition to this, an oxygen concentration in a gas phase in the recovery tank 37 or the raw material monomer tank 1 is set at 2 to 8% by volume. If the recovered raw material monomer is wanted to be preserved in the recovery tank 37 for a long time, it is preferable to preserve it at a low temperature of, for example, 0 to 5°C.

In this embodiment, the continuous bulk polymerization apparatus wherein the first reactor and the second reactor are both used to conduct the continuous bulk polymerization is described. However, the continuous polymerization apparatus of the present invention is not limited thereto, one or both of the first reactor and the second reactor may be used to conduct continuous solution polymerization. In such embodiment, since a solvent is used for the solution polymerization, the continuous polymerization apparatus is provided, in addition to a similar configuration to the continuous polymerization apparatus described above with reference to Fig. 1, with a solvent tank and a supply line and a pump (supply means) associated with the solvent tank to supply the solvent to a certain reactor for conducting the solution polymerization. The solvent tank and the supply line and the pump (supply means) associated with the solvent tank are not particularly limited, those similar to conventionally used ones can be used. The solvent can be supplied to the certain reactor for conducting the solution polymerization after being mixed with raw material monomer and/or the polymerization initiator, or can be supplied to the certain reactor for conducting the solution polymerization directly. In the above certain reactor, the polymerization step is conducted similarly (under an adiabatic condition) to the polymerization step described above with reference to Fig. 1, except that the solvent is used in the polymerization reaction. As to the solvent, it is appropriately selected according to the raw material monomer of the solution polymerization reaction and so on, and is not particularly limited, but examples thereof include toluene, xylene, ethyl benzene, methyl isobutyl ketone, methyl alcohol, ethyl alcohol, octane, decane, cyclohexane, decalin, butyl acetate, pentyl acetate, and so on. A ratio C : D is, for example, 70:30 to 95:5, and preferably 80:20 to 90:10, but is not limited thereto, wherein C represents a supply flow rate (kg/h) of the raw material monomer to the certain reactor for conducting the solution polymerization, and D represents a supply flow rate (kg/h) of the solvent to this certain reactor.

The continuous polymerization apparatus and the process for producing the polymer composition of the present invention are hereinbefore described through the embodiment of the present invention in detail. According to the present invention, there is provided the novel continuous polymerization apparatus and the use of such continuous polymerization apparatus can conduct the polymerization in at least two stages in series by using at least the first reactor and the second reactor, so that the polymerization reaction conditions, more specifically, the temperature, the time period (average residence time), the amount of the polymerization initiator (a ratio of the polymerization initiator to the raw material monomer) and so on can be set for the first polymerization step and the second polymerization step independently. Thereby, it becomes possible to control syndiotacticity of the polymer contained in the resin composition obtained in the end, and to produce more efficiently the polymer composition which is suitable for obtaining the resin composition having high heat resistance and heat stability.

However, the present invention is not limited to the above embodiment, and various modifications can be made. For example, three or more reactors can be used to conduct the polymerization in three or more stages in series. Further, the process for producing the polymer composition of the present invention may be conducted in a batch manner, although it is preferable to conduct the process continuously by using the continuous polymerization apparatus of the present invention.

### Industrial Applicability

The present invention can be used for producing a polymer composition which is suitable for obtaining a resin composition comprising a methacrylic ester polymer(s).

The present application claims priority to Japanese Patent Application No. 2010-249892 filed on November 8, 2010, entitled "CONTINUOUS POLYMERIZATION APPARATUS AND PROCESS FOR PRODUCING POLYMER COMPOSITION." The contents of this application are incorporated herein by reference thereto in their entirety.

## Claims

1. A continuous polymerization apparatus comprising at least first and second reactors of a complete mixing type, **characterized in that**
each of the reactors is provided with a supply port and an effluent port which is located at a reactor's top;
the supply port of the first reactor is connected to a supply source of a raw material monomer and a polymerization initiator; and
the effluent port of the first reactor is connected to the supply port of the second reactor.

2. The continuous polymerization apparatus according to claim 1, wherein the first and the second reactors are both suitable to conduct continuous bulk polymerization.

3. The continuous polymerization apparatus according to claim 1 or 2, wherein said supply port of the second reactor or another supply port provided to the second reactor is connected to a supply source of an additional polymerization initiator.

4. The continuous polymerization apparatus according to any one of claims 1 to 3, wherein an inner volume of the first reactor is different from an inner volume of the second reactor.

5. The continuous polymerization apparatus according to any one of claims 1 to 4, wherein the effluent port of the first reactor is connected to the supply port of the second reactor by a connection line provided with a temperature regulating means.

6. The continuous polymerization apparatus according to claim 5, wherein the first reactor is provided with a temperature detecting means for detecting a temperature in the first reactor; and
the temperature regulating means of the connection line is controlled so that a temperature of the connection line is at substantially the same temperature as the temperature of the first reactor detected by the temperature detecting means.

7. A process for producing a polymer composition
using the continuous polymerization apparatus according to any of claims 1 to 6, which comprises
a first polymerization step of supplying a raw material monomer and a polymerization initiator to said first reactor through the supply port of the first reactor from the supply source of the raw material monomer and the polymerization initiator to be subjected to continuous polymerization under an adiabatic condition in the first reactor, and taking a resultant intermediate composition from the effluent port of the first reactor; and
a second polymerization step of supplying the intermediate composition to said second reactor through the supply port of the second reactor to be further subjected to continuous polymerization under an adiabatic condition in the second reactor, and taking a resultant polymer composition from the effluent port of the second reactor.
